# EUROPEAN PATENT APPLICATION

(11) **EP 4 790 775 A1**
(43) Date of publication of application: **12.08.2026**
(21) Application number: 25210427.8
(22) Date of filing: 22.10.2025
(51) Int. Cl.: H01M 10/04, H01M 10/0585

(54) **ELECTRODE ASSEMBLY FOR SECONDARY BATTERIES AND METHOD OF MANUFACTURING ELECTRODE ASSEMBLY**

(30) Priority: 11.02.2025 KR 20250017034
(71) Applicant: SAMSUNG SDI CO., LTD., Yongin-si, Gyeonggi-do 17084 (KR)
(72) Inventor: KWON, Ye Lim, 17084 Yongin-si, Gyeonggi-do (KR)
(74) Representative: Bardehle Pagenberg Partnerschaft mbB Patentanwälte Rechtsanwälte

(57) **Abstract**

A method of manufacturing an electrode assembly for secondary batteries capable of simultaneously improving the accuracy and speed of a stacking process and an electrode assembly manufactured using the method. The method includes preparing a current collection set, cutting the current collection set into a predetermined pattern; and stacking the current collection set that is cut.

## Description

### BACKGROUND

### 1. Field

Embodiments of the present disclosure relate to an electrode assembly for secondary batteries and a method of manufacturing the electrode assembly.

### 2. Description of the Related Art

Unlike primary batteries are not designed to be (re)charged, secondary (also known as rechargeable) batteries are batteries that are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

This Background section is for the general understanding of the background of the present disclosure, and therefore, it may contain information that does not constitute related (or prior) art.

### SUMMARY

The present invention is defined by the independent claims and various embodiments are provided in the dependent claims.

These and other aspects and features of the present disclosure will be described in or will be apparent from the following description of embodiments of the present disclosure.

A method of manufacturing an electrode assembly for secondary batteries according to an embodiment of the present disclosure includes a transfer step of preparing a current collection set including a first electrode plate, a second electrode plate, a first separator interposed between the first and second electrode plates, and a second separator provided on a surface of the first electrode plate or the second electrode plate, a notching step of cutting the current collection set into a plurality of segments each having a predetermined pattern, and a stacking step of stacking the plurality of segments, wherein the first electrode plate includes a first electrode active material layer configured to cover at least one surface of a first electrode current collector made of a plate-shaped metal foil and a first electrode uncoated portion that is not coated with the first electrode active material layer, the second electrode plate includes a second electrode active material layer configured to cover at least one surface of a second electrode current collector made of a plate-shaped metal foil and a second electrode uncoated portion that is not coated with the second electrode active material layer, the first electrode plate and the second electrode plate are disposed such that the first electrode uncoated portion and the second electrode uncoated portion do not overlap each other.

Embodiments of the present disclosure provide a method of manufacturing an electrode assembly for secondary batteries, the method including: cutting a current collection set into a plurality of segments each having a predetermined pattern, wherein the current collection set comprises a first electrode plate, a second electrode plate, a first separator interposed between the first and second electrode plates, and a second separator provided on a surface of the first electrode plate or the second electrode plate; and stacking the plurality of segments, wherein the first electrode plate includes a first electrode active material layer and a first electrode uncoated portion, the first electrode active material layer including a first electrode active material and covering at least one surface of a first electrode current collector, the first electrode uncoated portion not being coated with the first electrode active material, wherein the second electrode plate includes a second electrode active material layer and a second electrode uncoated portion, the second electrode active material layer including a second electrode active material and covering at least one surface of a second electrode current collector, the second electrode uncoated portion not being coated with the second electrode active material, wherein the first electrode uncoated portion and the second electrode uncoated portion do not overlap each other.

In some embodiments, the first electrode plate, the second electrode plate, and the first and second separators may be integrally stacked.

In some embodiments, the notching step may include simultaneously cutting the first electrode active material layer, the first electrode uncoated portion, the second electrode active material layer, and the second electrode uncoated portion.

In some embodiments, the first electrode uncoated portion may extend in a first direction, which is a longitudinal direction, and may be disposed so as to be located on one side of a second direction, which is a width direction, and the second electrode uncoated portion may extend in the first direction and may be disposed so as to be located on the other side of the second direction.

In some embodiments, the first electrode uncoated portion extends in a longitudinal direction and located on one side of a lateral direction, and wherein the second electrode uncoated portion extends in the longitudinal direction and located on an other side of the lateral direction.

In some embodiments, the current collection set may be configured such that the first electrode uncoated portion is exposed to the one side of the second direction and the second electrode uncoated portion is exposed to the other side of the second direction.

In some embodiments, the first electrode uncoated portion is exposed to the one side and the second electrode uncoated portion is exposed to the other side.

In some embodiments, the notching step may include cutting the current collection set into a pattern including a main region corresponding to the first electrode active material layer and a protruding region protruding from the main region to each of the one side and the other side of the second direction.

In some embodiments, the predetermined pattern comprises a main region corresponding to the first electrode active material layer and a protruding region protruding from the main region to each of the one side and the other side.

In some embodiments, the notching step may include cutting the current collection set into individual segments, each having a predetermined pattern and including a main region corresponding to the first electrode active material layer and a protruding region protruding from the main region to each of the one side and the other side of the second direction, are sequentially arranged in the first direction, which is the longitudinal direction.

In some embodiments, the individual segments are sequentially arranged in the longitudinal direction, each individual segment comprising a main region corresponding to the first electrode active material layer and a protruding region protruding from the main region to each of the one side and the other side.

In some embodiments, the notching step may include cutting the current collection set using at least one of a die frame and a laser.

In some embodiments, the cutting is performed using a die frame or a laser.

In some embodiments, the area of the first electrode active material layer may be less than the area of the second electrode active material layer.

In some embodiments, the area of the separator may be greater than the area of each of the first electrode active material layer and the second electrode active material layer.

In some embodiments, the method may further include fixing at least a part of the current collection set using a fixing member in the transfer step and removing the fixing member in the stacking step.

In some embodiments, in the preparing, at least a part of the current collection set is fixed using a fixing member, and wherein in the stacking, the fixing member is removed.

In some embodiments, the first electrode plate may have first electrode uncoated portions extending from the one side in the second direction so as to be spaced at regular intervals, and the notching step may include cutting at least a part of each of the first electrode uncoated portions extending in the second direction.

In some embodiments, the first electrode plate has a plurality of the first electrode uncoated portion extending from the one side spaced at regular intervals, and wherein in the cutting, at least a part of each of the plurality of the first electrode uncoated portion extend in the lateral direction.

In some embodiments, the first electrode plate may be configured such that the first electrode uncoated portion extends in the first direction from the center of the second direction, and the second electrode plate may include a 2-1 electrode plate disposed such that the second electrode uncoated portion extends in the first direction and is located on the one side of the second direction and a 2-2 electrode plate disposed such that the second electrode uncoated portion extends in the first direction and is located on the other side of the second direction.

In some embodiments, the first electrode uncoated portion extends in the longitudinal direction from a center relative to the lateral direction, and the second electrode plate comprises a first column electrode plate having the second electrode uncoated portion extending in the longitudinal direction and being located on the one side and a second column electrode plate having the second electrode uncoated portion extending in the longitudinal direction and being located on the other side.

In some embodiments, the current collection set may be configured such that the second electrode uncoated portion is exposed to each of the one side and the other side of the second direction and the first electrode uncoated portion is formed along a center line thereof.

In some embodiments, the second electrode uncoated portion is exposed to each of the one side and the other side and the first electrode uncoated portion is formed along a center line of the current collection set

In some embodiments, the notching step may include cutting the current collection set into a pattern including a main region corresponding to the first electrode active material layer and a protruding region protruding from the main region in a direction toward each of the second electrode uncoated portion of the first column electrode plate and the first electrode uncoated portion.

In some embodiments, the predetermined pattern comprises a main region corresponding to the first electrode active material layer and a protruding region protruding from the main region in a direction toward each of the second electrode uncoated portion of the first column electrode plate and the first electrode uncoated portion.

In some embodiments, the notching step may include cutting the current collection set into a pattern including a main region corresponding to the first electrode active material layer and a protruding region protruding from the main region in a direction toward each of the second electrode uncoated portion of the second column electrode plate and the first electrode uncoated portion.

In some embodiments, the predetermined pattern comprises a main region corresponding to the first electrode active material layer and a protruding region protruding from the main region in a direction toward each of the second electrode uncoated portion of the second column electrode plate and the first electrode uncoated portion.

In some embodiments, the notching step may include cutting the current collection set into individual segments, each having a predetermined pattern and including a main region corresponding to the first electrode active material layer and a protruding region protruding from the main region to each of the one side and the other side of the second direction, are sequentially arranged in the second direction with respect to the first electrode uncoated portion.

In some embodiments, the individual segments are sequentially arranged in the lateral direction with respect to the first electrode uncoated portion, each individual segment comprising a main region corresponding to the first electrode active material layer and a protruding region protruding from the main region to each of the one side and the other side of the second direction.

In some embodiments, the individual segments are sequentially arranged in the second direction and may be configured such that the protruding regions located at the first electrode uncoated portion engage with each other.

In some embodiments, a plurality of the protruding region located at the first electrode uncoated portion engage with each other or one another.

In some embodiments, the method may further include a step of stacking the current collection set in plural such that the plurality of current collection sets, such as at least two current collection sets, is provided and a notching step of cutting the plurality of stacked current collection sets into a predetermined pattern.

In some embodiments, the method further includes: cutting a plurality of the current collection set that is stacked, into a second predetermined pattern.

In some embodiments, the stacking step may include sequentially stacking the second electrode plate, the separator, the first electrode plate, and the separator or sequentially stacking the separator, the second electrode plate, the separator, and the first electrode plate.

In some embodiments, the second electrode plate, the separator, the first electrode plate, and the separator are sequentially stacked, or wherein the separator, the second electrode plate, the separator, and the first electrode plate are sequentially stacked.

An electrode assembly for secondary batteries manufactured using a method of manufacturing an electrode assembly for secondary batteries to an embodiment of the present disclosure to accomplish the above object includes a first electrode plate having a first electrode uncoated portion, a part of which is notched, extending and protruding to one side of a second direction and a second electrode plate having a second electrode uncoated portion, a part of which is notched, extending and protruding to the other side of the second direction, wherein the first electrode plate is provided in plural, the second electrode plate is provided in plural, and the plurality of first electrode plates and the plurality of second electrode plates are stacked in the state in which a plurality of separators is interposed therebetween.

Embodiments of the present disclosure provide an electrode assembly for secondary batteries, the electrode assembly including: a plurality of first electrode plates each having a first electrode uncoated portion, a part of the first electrode uncoated portion being notched, the first electrode uncoated portion extending and protruding to one side of a lateral direction; and a plurality of second electrode plates each having a second electrode uncoated portion, a part of the second electrode uncoated portion being notched, the second electrode uncoated portion extending and protruding to an other side of the lateral direction, wherein a separator is interposed between each of the plurality of first electrode plates and each the plurality of second electrode plates.

In some embodiments, corners of both sides of each of the first electrode uncoated portion and the second electrode uncoated portion may be notched, or the first electrode uncoated portion and the second electrode uncoated portion may protrude asymmetrically.

In some embodiments, corners of both sides of each of the first electrode uncoated portion and the second electrode uncoated portion are notched, or wherein each of the first electrode uncoated portion and the second electrode uncoated portion protrude outwardly asymmetrically.

### BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings.
FIG. 1 is a perspective view of a stack apparatus for manufacturing secondary batteries according to various embodiments of the present disclosure;
FIG. 2 is a perspective view showing an electrode assembly for secondary batteries according to various embodiments of the present disclosure;
FIG. 3 is an exploded perspective view of a current collection set of the electrode assembly shown in FIG. 2 according to various embodiments of the present disclosure;
FIG. 4 is an exploded perspective view of a current collection set of an electrode assembly including a two-column coated electrode plate according to various embodiments of the present disclosure;
FIG. 5 is an exploded perspective view of a current collection set of an electrode assembly including a pattern coated electrode plate according to various embodiments of the present disclosure;
FIG. 6 is a plan view of the electrode assembly shown in FIG. 2 according to various embodiments of the present disclosure;
FIG. 7 is a plan view of the electrode assembly shown in FIG. 4 according to various embodiments of the present disclosure;
FIG. 8 is a perspective view illustrating a secondary battery according to various embodiments of the present disclosure;
FIG. 9 is a cross-sectional view taken along the line II-II in FIG. 8 according to various embodiments of the present disclosure;
FIG. 10 is a perspective view illustrating a battery module according to various embodiments of the present disclosure;
FIG. 11 shows a battery pack according to various embodiments of the present disclosure;
FIG. 12 shows a battery pack according to various embodiments of the present disclosure;
FIG. 13 shows a vehicle body and vehicle body parts having a battery pack according to various embodiments of the present disclosure;
FIG. 14 shows a vehicle body and vehicle body parts having a battery pack according to various embodiments of the present disclosure.

### DETAILED DESCRIPTION

Embodiments of the present disclosure are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

Therefore, the embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

In addition, it will be understood that the terms "comprise or include" and/or "comprising or including," when used in this specification, specify the presence of stated features, integers, steps, operations, elements, and/or components but do not preclude the presence or addition of one or more other features, integers, steps, operations, elements, components, and/or groups thereof. In addition, when describing embodiments of the present disclosure, the wording "may ~" or "may be~" may include "one or more embodiments of the present disclosure."

In addition, for a better understanding of the invention, the attached drawings are not drawn to scale and the dimensions of some components may be exaggerated. In addition, the same reference numbers may be assigned to the same components in different embodiments. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," etc., may be used herein to describe various components, these components should not be limited by these terms. These terms are used to distinguish one component from another component. Thus, unless otherwise defined, a first component described below could be termed a second component, without departing from the spirit and scope of the present disclosure.

Throughout the specification, the singular forms are intended to include the plural forms as well, unless the context clearly indicates otherwise.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the related requirements.

Also, it will be understood that when an element is referred to as being "coupled to," "linked to," or " "connected to" another element, these elements can be directly coupled or connected to each other, another intervening element may be present therebetween, or the respective elements may be coupled, linked, or connected to each other through another elements. In addition, it will be understood that when an element is referred to as being electrically coupled to another element, the element can be directly connected to another element or an intervening element may be present therebetween such that the element and another element are indirectly connected to each other.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

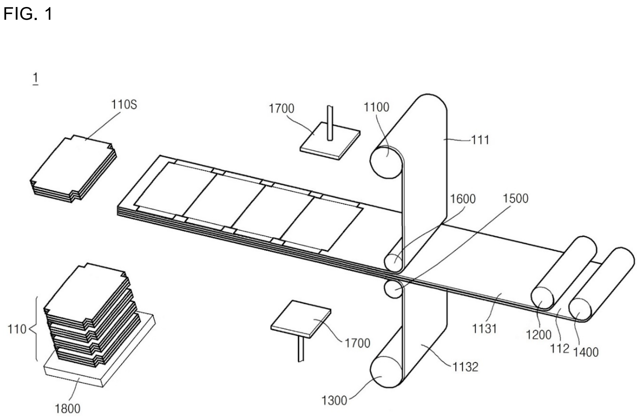

FIG. 1 is a perspective view of a stack apparatus 1 for manufacturing secondary batteries.

As shown in FIG. 1, the stack apparatus 1 may include a first electrode plate supply unit 1100, a first separator supply unit 1200, a second separator supply unit 1300, and a second electrode plate supply unit 1400.

The first electrode plate supply unit 1100 may include a first electrode plate supply roll. A first electrode plate 111 may be wound on the first electrode plate supply roll. As the first electrode plate supply roll rotates, the first electrode plate 111 may be unwound and supplied. Therefore, the first electrode plate 111 may be continuously supplied.

The first separator supply unit 1200 may include a first separator supply roll. A first separator 1131 may be wound on the first separator supply roll. As the first separator supply roll rotates, the first separator 1131 may be unwound and supplied. Therefore, the first separator 1131 may be continuously supplied and stacked.

The second separator supply unit 1300 may include a second separator supply roll. A second separator 1132 may be wound on the second separator supply roll. As the second separator supply roll rotates, the second separator 1132 may be unwound and supplied. Therefore, the second separator 1132 may be continuously supplied and stacked. In some embodiments, the first separator 1131 and the second separator 1132 may be substantially identically implemented and may be collectively referred hereinafter to as a separator.

The second electrode plate supply unit 1400 may include a second electrode plate supply roll. A second electrode plate 112 may be wound on the second electrode plate supply roll. As the second electrode plate supply roll rotates, the second electrode plate 112 may be unwound and supplied. Therefore, the second electrode plate 112 may be continuously supplied.

The stack apparatus 1 may further include a first guide roll 1500 and a second guide roll 1600. The first electrode plate 111, the first separator 1131, the second separator 1132, and the second electrode plate 112 supplied from the first electrode plate supply unit 1100, the first separator supply unit 1200, the second separator supply unit 1300, and the second electrode plate supply unit 1400, respectively, may be inserted between the first guide roll 1500 and the second guide roll 1600. In some embodiments, between the first guide roll 1500 and the second guide roll 1600, the second separator 1132, the second electrode plate 112, the first separator 1131, and the first electrode plate 111 may be sequentially disposed and stacked from the bottom to form a current collection set 110S. The current collection set 110S may be transferred to a stack unit 1800 as the first guide roll 1500 and the second guide roll 1600 rotate.

In some embodiments, between the first guide roll 1500 and the second guide roll 1600, the second electrode plate 112, the first separator 1131, the first electrode plate 111, and the second separator 1132 may be sequentially disposed and stacked from the bottom to form the current collection set 110S. In some embodiments, a plurality of separators may be provided between a plurality of first electrode plates 111 and a plurality of second electrode plates 112.

In some embodiments, the stack apparatus 1 may include a notching unit 1700 configured to cut the current collection set 110S in a predetermined pattern. The notching unit 1700 may cut the current collection set 110S using at least one of a die frame and a laser.

In some embodiments, the stack apparatus 1 may include a pick and place device (not shown). The pick and place device may transfer the current collection set 110S cut in the predetermined pattern to the stack unit 1800. If the predetermined pattern is an array of multiple patterns, several current collection sets may be notched at once. A plurality of current collection sets may be sequentially stacked on the stack unit 1800.

The plurality of current collection sets may be stacked on the stack unit 1800. The stacked current collection sets may form an electrode assembly 110. The electrode assembly 110 may be configured such that the first electrode plate 111 and the second electrode plate 112 are stacked in the state in which the separator is interposed therebetween.

In some embodiments, the stack apparatus 1 may further include a fixing unit having a fixing member configured to fix a part of each of the current collection sets 110S before the current collection sets 110S reach the notching unit 1700 such that the current collection sets 110S can be aligned and fixed upon notching the current collection sets 110S in the state in which the current collection sets 110S are stacked. For example, the current collection sets in the stacked state after unwinding may be picked up using a jig or tweezers so as to be moved together in a movement direction. Even after notching, the current collection sets may be moved in a picked-up state such that the fixed state of the current collection sets is maintained until the current collection sets are transferred to the stack unit 1800, after which the fixing member may be removed. Upon notching the current collection sets 110S, corners of the current collection sets may be partially notched such that the current collection sets can be aligned and fixed based on the partially notched parts.

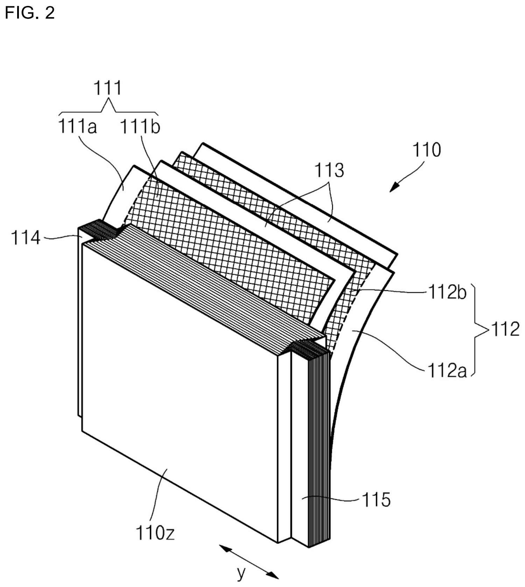

FIG. 2 is a perspective view showing an electrode assembly 110 for secondary batteries.

As shown in FIG. 2, the electrode assembly 110 may include a first electrode plate 111, a second electrode plate 112, and a separator 113 interposed between the first and second electrode plates 111 and 112 are sequentially stacked. The electrode assembly 110 may have a cuboidal structure in which a first electrode plate 111, a plate-shaped separator 113, and a second electrode plate 112 are sequentially stacked.

The electrode assembly 110 may include a first electrode plate 111, a second electrode plate 112, and a separator 113 interposed therebetween. In some examples, the electrode assembly 110 may be formed by stacking a first electrode plate 111, a separator 113, and a second electrode plate 112, each of which may be formed in a thin plate shape or a thin film shape. In some embodiments, the electrode assembly 110 may be formed by stacking one or more electrode assemblies 110 adjacent to each other or one another, and the number of electrode assemblies 110 is not limited in the present invention. In some embodiments, the first electrode plate 111 may serve as a positive electrode, and the second electrode plate 112 may serve as a negative electrode. In some embodiments, the first electrode plate 111 may serve as a negative electrode, and the second electrode plate 112 may serve as a positive electrode.

The first electrode plate 111 may be formed by applying a first electrode active material such as a transition metal oxide to a first electrode current collecting plate (first electrode current collector) made of a metal foil including aluminum or an aluminum alloy. The first electrode plate 111 may include a first electrode active material layer 111b having the first electrode active material applied thereto. The first electrode plate 111 may include a first electrode uncoated portion 111a, which is the region to which the first electrode active material has not been applied.

In some embodiments, the first electrode uncoated portion 111a may be a first electrode tab 114. The first electrode tab 114 may be referred to as a substrate tab. The first electrode tab 114 may be formed by cutting the first electrode plate 111 such that the first electrode tab 114 protrudes to one side in advance during the manufacture of the first electrode plate 111, or may protrude farther to one side than the separator 113 without cutting.

The positive electrode active material, i.e., the first active material, may include a compound capable of reversibly intercalating/deintercalating lithium (e.g., a lithiated intercalation compound). For example, a composite oxide of lithium and a metal including cobalt, manganese, nickel, or combinations thereof may be used.

The composite oxide may include a lithium transition metal composite oxide, and non-limiting examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

For example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤ b≤0.5, 0≤c≤0.5, 0< *α* <2); LiₐNi_{1-b-c}Mn_{b}X_{c}O_{2-α}D_{α} (0.90≤a≤1.8, 0≤b≤0.5, 0≤c≤0.5, 0< α <2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂GₑO₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90 ≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

As the current collector, aluminum (Al) may be used, but is not limited thereto.

The second electrode plate 112 may be formed by applying a second electrode active material such as graphite or carbon to a second electrode current collecting plate (second electrode current collector) made of a metal foil including copper, a copper alloy, nickel, or a nickel alloy. The second electrode plate 112 may include a second electrode active material layer 112b having the second electrode active material applied thereto. The second electrode plate 112 may include a second electrode uncoated portion 112a, which is the region to which the second electrode active material has not been applied.

In some embodiments, the second electrode uncoated portion 112a may be a second electrode tab 115. The second electrode tab 115 may be referred to as a substrate tab. The second electrode tab 115 may be formed by cutting the second electrode plate 112 such that the second electrode tab 115 protrudes to the other side in advance during the manufacture of the second electrode plate 112, or may protrude farther to the other side than the separator 113 without cutting.

A negative electrode active material, i.e., the second active material, may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may include a carbon-based negative electrode active material, which may include, for example, crystalline carbon, amorphous carbon, or a combination thereof. Non-limiting examples of the crystalline carbon may include graphite, such as natural graphite or artificial graphite, and non-limiting examples of the amorphous carbon may include soft carbon, hard carbon, a pitch carbide, a meso-phase pitch carbide, sintered coke, or the like.

A Si-based negative electrode active material or a Sn-based negative electrode active material may be used as the material capable of being doped and undoped with lithium. The Si-based negative electrode active material may include silicon, a silicon-carbon composite, SiOₓ (0 < x ≤ 2), a Si-based alloy, or a combination thereof.

The silicon-carbon composite may include a composite of silicon and amorphous carbon. In some embodiments, the silicon-carbon composite may be in the form of a silicon particle and amorphous carbon coated on the surface of the silicon particle.

The silicon-carbon composite may include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be included.

The negative electrode current collector may include copper foil, nickel foil, stainless steel foil, titanium foil, nickel foam, copper foam, conductive metal-coated polymer substrate, or combinations thereof.

An electrolyte for a lithium secondary battery may include a non-aqueous organic solvent and a lithium salt.

The non-aqueous organic solvent acts as a medium through which ions involved in the electrochemical reaction of the battery can migrate.

The non-aqueous organic solvent may include a carbonate-based, an ester-based, an ether-based, a ketone-based, an alcohol-based solvent, an aprotic solvent, and may be used alone or in combination of two or more.

When a carbonate-based solvent is used, a mixture of cyclic carbonate and chain carbonate may be used.

The separator 113 may be interposed between the first electrode plate 111 and the second electrode plate 112 to prevent electrical short circuiting that may happen between the first electrode plate 111 and the second electrode plate 112. The separator 113 may be provided in a pair, and the first electrode plate 111 may be fitted between the pair of separators 113. The separator 113 may be interposed between the first electrode plate 111 and the second electrode plate 112 to prevent electrical short circuiting and to allow migration of lithium ions. In some embodiments, the separator 113 may be located at the outermost side of the electrode assembly 110. The separator 113 may be located on a long side surface 110z of the electrode assembly 110. However, the present disclosure is not limited thereto.

Depending on the type of lithium secondary battery, the separator may be present between a positive electrode and a negative electrode. The separator may include polyethylene, polypropylene, polyvinylidene fluoride, or a multilayer film of two or more layers thereof.

The separator 113 may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

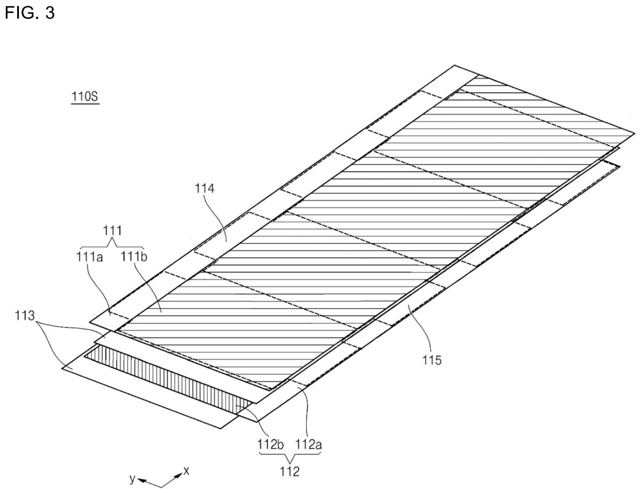

FIG. 3 is an exploded perspective view of the current collection set 110S of the electrode assembly 110 shown in FIG. 2.

Referring to FIG. 3, the first electrode plate 111 may include a first electrode active material layer 111b configured to cover at least one surface of the first electrode current collector, which is made of a plate-shaped metal foil, and may include a first electrode uncoated portion 111a, which is not coated with the first electrode active material layer 111b. The first electrode uncoated portion 111a may be used as a region for current collection and electrical connection in the electrode assembly 110.

The second electrode plate 112 may include a second electrode active material layer 112b configured to cover at least one surface of the second electrode current collector, which is made of a plate-shaped metal foil, and may include a second electrode uncoated portion 112a, which is not coated with the second electrode active material layer 112b. The second electrode uncoated portion 112a may perform the same function as the first electrode uncoated portion 111a and may maximize the structural stability and electrical efficiency of the electrode assembly 110.

In some embodiments, the first electrode plate 111 and the second electrode plate 112 of the electrode assembly 110 may be disposed such that the first electrode uncoated portion 111a and the second electrode uncoated portion 112a do not overlap each other. In some embodiments, the first electrode active material layer 111b, the first electrode uncoated portion 111a, the second electrode active material layer 112b, and the second electrode uncoated portion 112a may be simultaneously cut. The first electrode active material layer 111b and the second electrode active material layer 112b may be cut simultaneously in the same process, and the first electrode uncoated portion 111a and the second electrode uncoated portion 112a may be cut simultaneously in the same process. This design may contribute to simplifying the process and improving productivity at the same time.

The first electrode uncoated portion 111a may extend in a first direction (x-axis), which is a longitudinal direction (e.g., a longitudinal direction of the current collection set 110S), and may be disposed so as to be located on one side in a second direction (y-axis), which is a lateral direction (e.g., a lateral direction of the current collection set 110S). The second electrode uncoated portion 112a may extend in the first direction and may be disposed so as to be located on the other side in the second direction. In some embodiments, the current collection set 110S may be configured such that the first electrode uncoated portion 111a is exposed to one side in the second direction and the second electrode uncoated portion 112a is exposed to the other side in the second direction. In some embodiments, the first direction (x-axis) may mean a vertical direction, and the second direction (y-axis) may mean a horizontal direction. The first direction may include a positive (+) direction of the x-axis and a negative (-) direction of the x-axis, which may be expressed as one side and the other side, respectively. The second direction may include a positive (+) direction of the y-axis and a negative (-) direction of the y-axis, which may be expressed as one side and the other side, respectively.

The first electrode uncoated portion 111a may extend in the first direction (x-axis), which is the longitudinal direction, and may be disposed so as to be located on one side in the second direction (y-axis), which is the lateral direction. The second electrode uncoated portion 112a may extend in the same longitudinal direction (x-axis), and may be disposed so as to be located on the opposite side in the lateral direction (y-axis). This disposition may minimize interference in the electrode assembly and may expose each uncoated portion to facilitate electrical connection.

In some embodiments, the current collection set 110S may be cut into a pattern including a main region corresponding to the first electrode active material layer 111b and a protruding region protruding from the main region to each of one side and the other side in the second direction (y-axis).

In some embodiments, the current collection set 110S may be cut into individual segments, each of which has a predetermined pattern and includes a main region corresponding to the first electrode active material layer 111b and a protruding region protruding from the main region to each of one side and the other side in the second direction (y-axis), are sequentially arranged in the first direction (x-axis), which is the longitudinal direction.

The predetermined pattern in which the current collection set 110S is notched may be a shape including an approximately rectangular main region and a protruding region partially protruding from each of one side and the other side of the main region. The predetermined pattern may be sequentially arranged in the longitudinal direction such that the plurality of current collection sets can be notched at once. This pattern may enable efficient notching and assembly of the current collection set 110S.

In some embodiments, the area of the first electrode active material layer 111b may be less than the area of the second electrode active material layer 112b. This may optimize the electrical performance of the electrode assembly 110, may reduce interference between the respective electrode plates, and may increase stack stability.

In some embodiments, the area of the separator 113 may be greater than the area of each of the first electrode active material layer 111b and the second electrode active material layer 112b. Increasing the area of the separator 113 may prevent electrical short circuit and enhance the durability of the electrode assembly 110.

In some embodiments, the current collection set 110S may be configured such that the second electrode plate 112, the separator 113, the first electrode plate 111, and the separator 113 are sequentially stacked from the bottom. In some embodiments, the current collection set 110S may be configured such that the separator 113, the second electrode plate 112, the separator 113, and the first electrode plate 111 are sequentially stacked from the bottom. The stack structure may be flexibly adjusted. Change in the stack structure may be selectively adjusted according to the requirements of the process and the design goals.

In some embodiments, a plurality of current collection sets 110S, e.g., at least two current collection sets 110S, may be stacked. For example, instead of notching each current collection set, a plurality of current collection sets, e.g., at least two current collection sets, may be stacked and then cut in the predetermined pattern at once. For example, not only may each current collection set be notched individually, but also a plurality of current collection sets, e.g., at least two current collection sets, may be stacked and then cut in the predetermined pattern at once. This may significantly increase the speed of the process and maximize productivity. For example, if a plurality of current collection sets is notched at once in a stacked state, errors that may occur in each step may be reduced and the quality of the electrode assembly may be consistently maintained. In an embodiment, a plurality of the current collection sets that are stacked may be cut into another predetermined pattern.

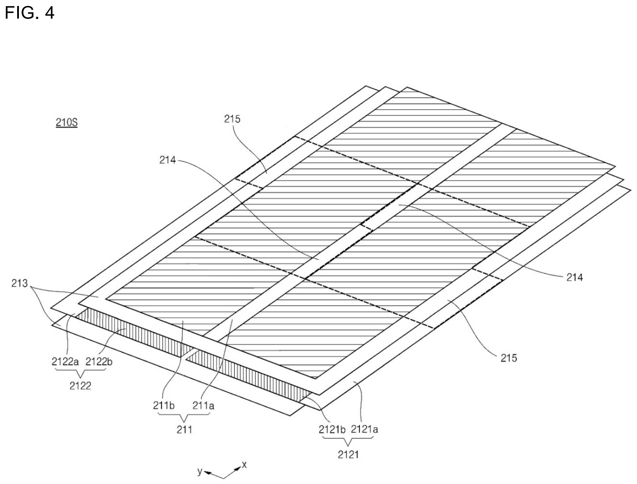

FIG. 4 is an exploded perspective view of a current collection set 210S of an electrode assembly 210 including a two-column coated electrode plate.

Referring to FIG. 4, the first electrode plate 211 may be configured such that a first electrode uncoated portion 211a extends in the first direction (x-axis) at the center of the first electrode plate 211 in the second direction (y-axis).

A second electrode plate may include a first column electrode plate 2121 disposed such that a second electrode uncoated portion 2121a extends in the first direction (x-axis) and is located on one side in the second direction (y-axis) and a second column electrode plate 2122 disposed such that a second electrode uncoated portion 2122a extends in the first direction (x-axis) and is located on the other side in the second direction (y-axis). In an embodiment, the first column electrode plate 2121 may include the second electrode uncoated portion 2121a and a second electrode active material layer 2121b, and the second column electrode plate 2122 may include the second electrode uncoated portion 2122a and a second electrode active material layer 2122b.

The current collection set 210S may be configured such that the second electrode uncoated portions 2121a and 2122a are exposed to one side and the other side in the second direction (y-axis), respectively, and the first electrode uncoated portion 211a is formed (or exposed) along the center line thereof.

In some embodiments, the current collection set 210S may be cut into a pattern including a main region corresponding to the first electrode active material layer 211b and a protruding region protruding from the main region in a direction toward each of the second electrode uncoated portions 2121a located on one side in the second direction (y-axis) and the first electrode uncoated portion 211a.

In some embodiments, the current collection set 210S may be cut into a pattern including a main region corresponding to the first electrode active material layer 211b and a protruding region protruding from the main region in a direction toward each of the second electrode uncoated portions 2122a located on the other side in the second direction (y-axis) and the first electrode uncoated portion 211a.

In some embodiments, the current collection set 210S may be cut into individual segments, each of which has a predetermined pattern and includes a main region corresponding to the first electrode active material layer 211a and a protruding region protruding from the main region to each of one side and the other side in the second direction (y-axis), are sequentially arranged in the second direction (y-axis) with respect to the first electrode uncoated portion 211a. The individual segments are sequentially arranged in the second direction (y-axis) and each segment may be configured such that the protruding regions located at the first electrode uncoated portion 211a engage with each other. This may reduce the region that is notched and discarded.

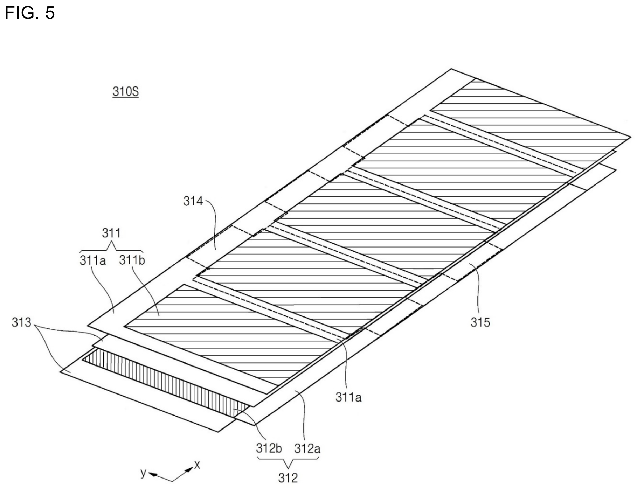

FIG. 5 is an exploded perspective view of a current collection set 310S of an electrode assembly including a pattern coated electrode plate.

Referring to FIG. 5, a first electrode uncoated portion 311a may extend in the first direction (x-axis), which is the longitudinal direction, and may be disposed so as to be located on one side in the second direction (y-axis), which is the lateral direction. In some embodiments, a first electrode plate 311 may have first electrode uncoated portions 311a extending from one side in the second direction (y-axis) so as to be spaced at regular intervals. In an embodiment, the current collection set 310S may be configured such that a separator 313, a second electrode plate 312, a separator 313, and the first electrode plate 311 are sequentially stacked from the bottom. In an embodiment, the first electrode plate 311 may the first electrode uncoated portion 311a that corresponds to a first electrode tab 314, and a first electrode active material layer 311b, and the second electrode plate 312 may a second electrode uncoated portion 312a that corresponds to a second electrode tab 315, and a second electrode active material layer 312b.

In some embodiments, at least a part of the first electrode uncoated portion 311a of the current collection set 310S extending in the second direction (y-axis) may be cut. In some embodiments, the first electrode uncoated portions 311a may be located not only on an upper part and a lower part but also on the left and right sides of a notched individual current collection set 310S.

As such, pattern coating (intermittent coating) may be applied to the first electrode plate 311 to adjust misalignment winding. For example, it is possible to increase the likelihood of assembling in a desired form in a notching process or to implement structural optimization that reduces material waste by adjusting the interval between the uncoated portions through pattern coating (intermittent coating).

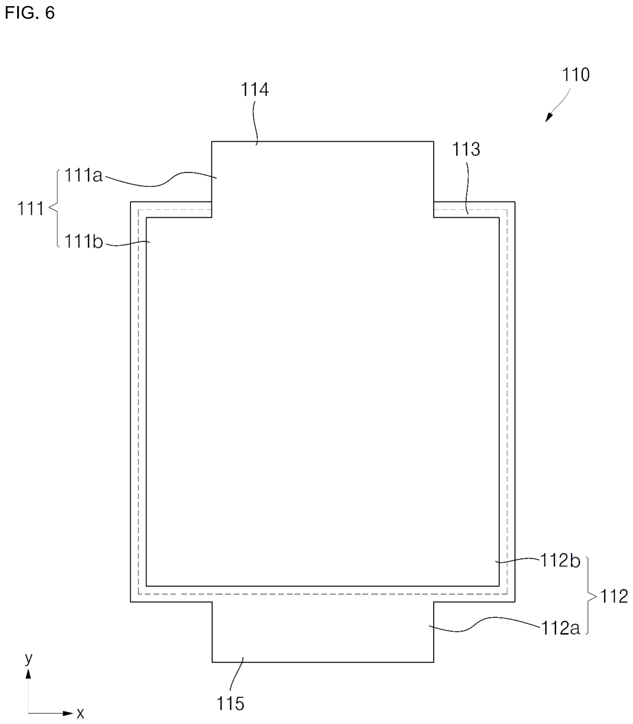

FIG. 6 is a plan view of the electrode assembly 110 shown in FIG. 2.

Referring to FIG. 6, the electrode assembly 110 may include a first electrode plate 111 having a first electrode uncoated portion 111a, a part of which is notched, the first electrode uncoated portion 111a extending and protruding to one side in the second direction (y-axis) and a second electrode plate 112 having a second electrode uncoated portion 112a, a part of which is notched, the second electrode uncoated portion 112a extending and protruding to the other side in the second direction (y-axis). Although each of the first electrode plate 111 and the second electrode plate 112 of the electrode assembly 110 is shown as a single sheet in the figure, a plurality of first electrode plates 111 and a plurality of second electrode plates 112 may be stacked in the state in which a plurality of separators 113 is interposed therebetween.

Corners of both sides of each of the first electrode uncoated portion 111a and the second electrode uncoated portion 112a may be notched. The first electrode uncoated portion 111a and the second electrode uncoated portion 112a may be a first electrode tab 114 and a second electrode tab 115, respectively. The first electrode tab 114 and the second electrode tab 115 may be located on one side and the other side, respectively, in the second direction (y-axis). The first electrode tab 114 and the second electrode tab 115 may have the same width or different widths in the first direction (x-axis) and the same protruding length or different protruding lengths in the second direction (y-axis).

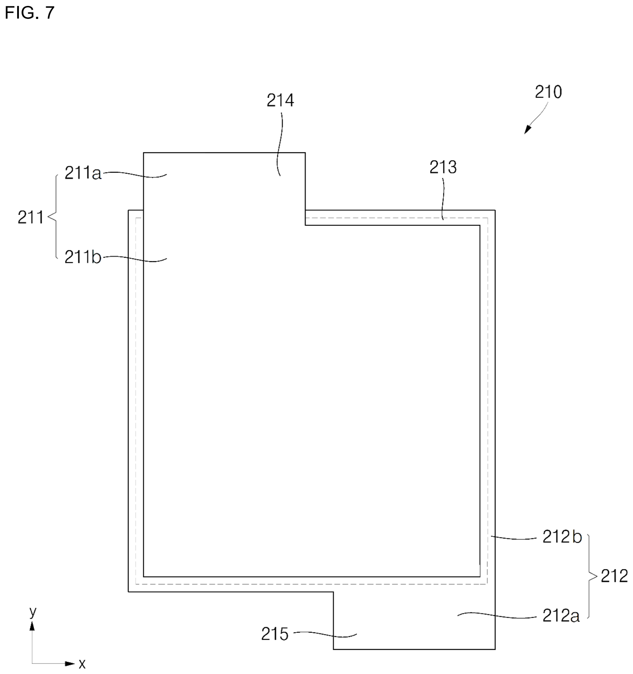

FIG. 7 is a plan view of the electrode assembly 210 shown in FIG. 4.

Referring to FIG. 7, the electrode assembly 210 may include a first electrode plate 211 having a first electrode uncoated portion 211a, a part of which is notched, the first electrode uncoated portion 211a extending and protruding to one side in the second direction (y-axis) and a second electrode plate 212 having a second electrode uncoated portion 212a, a part of which is notched, the second electrode uncoated portion 212a extending and protruding to another side in the second direction (y-axis). Although each of the first electrode plate 211 and the second electrode plate 212 of the electrode assembly 210 is shown as a single sheet in the figure, a plurality of first electrode plates 211 and a plurality of second electrode plates 212 may be stacked in the state in which a plurality of separators 213 is interposed therebetween.

The first electrode uncoated portion 211a and the second electrode uncoated portion 212a may protrude asymmetrically (e.g., protrude outwardly asymmetrically). The first electrode uncoated portion 211a and the second electrode uncoated portion 212a may be a first electrode tab 214 and a second electrode tab 215, respectively. The first electrode tab 214 and the second electrode tab 215 may be located on one side and the other side, respectively, in the second direction (y-axis). Based on FIG. 7, the first electrode tab 214 may protrude from the left hand side in the second direction (y-axis), and the second electrode tab 215 may protrude from the right hand side in the second direction (y-axis). The first electrode tab 214 and the second electrode tab 215 may have the same width or different widths in the first direction (x-axis) and the same protruding length or different protruding lengths in the second direction (y-axis).

The present disclosure provides a process capable of simultaneously improving the speed and accuracy of the stacking and notching processes in the process of manufacturing the electrode assembly, reducing material waste, and flexibly responding to various structural designs. To this end, the present disclosure overcomes the limitations of conventional processes by optimizing the structure and arrangement of the current collection set, the patterning of the stacking and notching processes, and the material design.

The present disclosure maximizes process efficiency not only through the process of cutting a single current collection set but also through the process of stacking two or more current collection sets and notching the two or more current collection sets at once. This method greatly reduces the time necessary to individually stack and cut each layer in the existing process, and at the same time, produces electrode assemblies of consistent quality by cutting a plurality of current collection sets in the same pattern.

The present disclosure may have the current collection set in a specific pattern including a main region and a protruding region, making it possible to reduce waste of materials in the notching process and to secure the structural stability of the assembly. The protruding region may be used to form an electrical connection of the electrode assembly, and the size and position of the protruding region may be flexibly adjusted according to the design requirements of the assembly.

In some embodiments, the stacking order may be changed by adjusting the stacking direction of the current collection set, making it possible to respond to various manufacturing environments and design requirements. Furthermore, the present disclosure increases accuracy and reduce material waste in the notching process by designing the position of and interval between the uncoated portions through pattern coating.

As such, the present disclosure provides a flexible process capable of improving the process speed and quality in the process of manufacturing the electrode assembly, reducing material waste, and satisfying various design requirements. In this manner, manufacturing costs can be reduced and high-quality electrode assemblies can be manufactured.

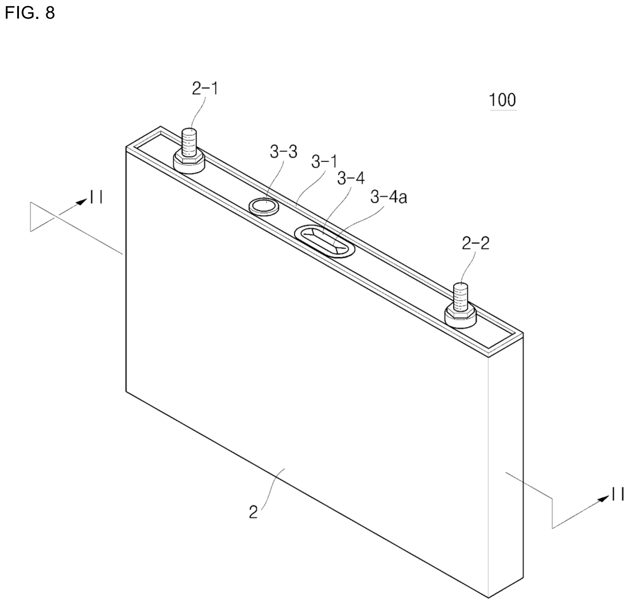

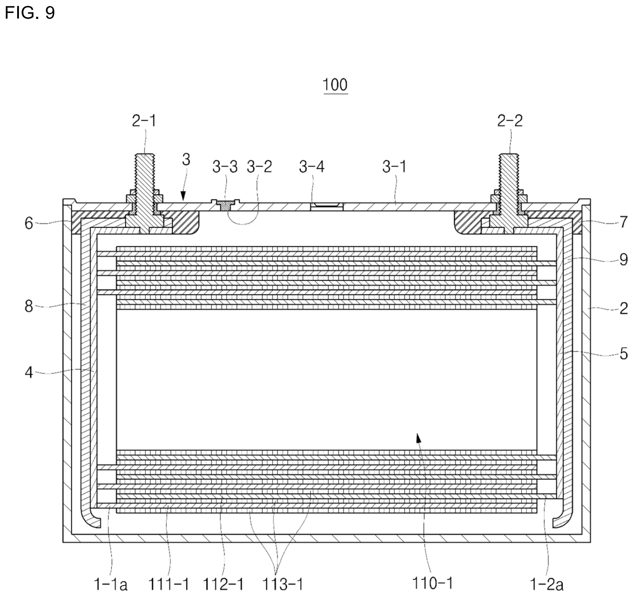

In some embodiments, the electrode assembly 110 may be applied to the prismatic secondary battery 100 shown in FIGS. 8 and 9.

FIG. 8 is a perspective view illustrating a secondary battery 100, and FIG. 9 is a cross-sectional view taken along the line II-II in FIG. 8.

Referring to FIGS. 8 and 9, the secondary battery 100 may include at least one electrode assembly 110-1 wound with a separator 113-1 as an insulator between the negative electrode 111-1 and the positive electrode 112-1, a case 2 in which the electrode assembly 110-1 is received (or accommodated) therein, and a cap assembly 3 coupled to an opening of the case 2.

The secondary battery 100 is described as a prismatic lithium ion secondary battery. However, the present disclosure is not limited thereto, and suitable aspects, features and principles described herein may be applied to various other types of batteries, such as lithium polymer batteries and/or cylindrical batteries.

Each of the negative electrode 111-1 and the positive electrode 112-1 may include a current collector made of a thin metal foil having a coated portion on which an active material is coated and an uncoated portion 1-1a, 1-2a on which an active material is not coated.

The negative electrode 111-1 and the positive electrode 112-1 are wound after interposing the separator 113-1, which is an insulator, therebetween. However, the present disclosure is not limited thereto, and the electrode assembly 110-1 may have the negative electrode 111-1 and the positive electrode 112-1, each made of a plurality of sheets, alternately stacked with a separator interposed therebetween.

The case 2 may form the overall outer appearance of the secondary battery 100 and may include a conductive metal, such as aluminum, aluminum alloy, or nickel-plated steel. The case 2 may provide a space in which the electrode assembly 110-1 is accommodated.

The cap assembly 3 may include a cap plate 3-1 covering an opening of the case 2, and the case 2 and the cap plate 3-1 include a conductive material. The negative electrode terminal 2-1 and the positive terminal 2-2 electrically connected to the negative electrode 111-1 and the positive electrode 112-1, respectively, may be installed to penetrate (or extend through) the cap plate 3-1 and protrude outwardly therethrough.

Outer peripheral surfaces (e.g., circumferential surfaces) of upper pillars of the negative and positive electrode terminals 2-1 and 2-2 protruding outwardly from the cap plate 3-1 may be threaded and may be fixed to the cap plate 3-1 by utilizing nuts.

The present disclosure is not limited thereto, and the negative and positive electrode terminals 2-1 and 2-2 may have a rivet structure and may be riveted or welded to the cap plate 3-1.

The cap plate 3-1 may be made of a thin plate and may be coupled to the opening of the case 2, and an electrolyte injection port 3-2 into which a sealing stopper 3-3 may be installed may be located (e.g., formed) in the cap plate 3-1, and a vent portion 3-4 having a notch 3-4a may be installed.

The negative and positive electrode terminals 2-1 and 2-2 may be electrically connected to current collectors including first and second current collectors 4 and 5 (hereinafter referred to as positive and negative electrode current collectors) that are bonded or coupled (e.g., by welding) to the negative uncoated portion 1-1a and the positive electrode uncoated portion 1-2a, respectively.

For example, the negative and positive electrode terminals 2-1 and 2-2 may be coupled by welding to the negative and positive electrode current collectors 4 and 5, respectively. However, the present disclosure is not limited thereto, and the negative and positive electrode terminals 2-1 and 2-2 may be integrally formed with the negative and positive electrode current collectors 4 and 5 respectively in one or more embodiments.

An insulation member may be installed between the electrode assembly 110-1 and the cap plate 3-1. The insulation member may include first and second lower insulation members 6 and 7, and each of the first and second lower insulation members 6 and 7 may also have a portion located between the electrode assembly 110-1 and the cap plate 3-1.

One end of a separation member may face one side of the electrode assembly 110-1 and may be installed between the insulation member and the negative or positive electrode terminals 2-1 and 2-2.

In some embodiments, the separation member may include first and second separation members 8 and 9.

In some embodiments, first ends of the first and second separation members 8 and 9 installed to face one side of the electrode assembly 110-1 may be respectively installed between the first and second lower insulation members 6 and 7 and the negative and positive electrode terminals 2-1 and 2-2.

The negative electrode terminal 2-1, which may be coupled by welding to the negative electrode current collector 4, may be coupled to first ends of the first lower insulation member 6 and the first separation member 8, and the positive electrode terminal 2-2, which may be coupled by welding to the positive electrode current collector 5, may be coupled to first ends of the second lower insulation member 7 and the second separation member 9.

A battery pack includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a cylindrical type, a prismatic type, or a pouch type according to the shape of battery. As used herein, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. The battery pack may further include a cooling member to remove/dissipate the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery cell constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

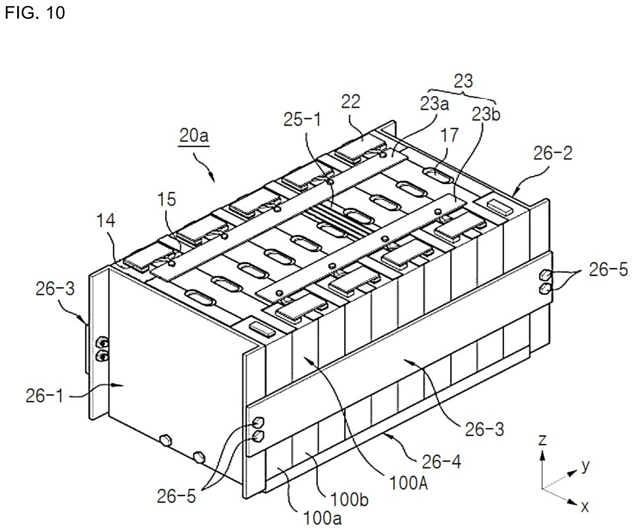

FIG. 10 is a perspective view illustrating a battery module 20a.

Referring to FIG. 10, the battery module 20a includes terminal parts 14 and 15, a plurality of battery cells 100A arranged in one direction, a connection tab 22 connecting a battery cell 100a to an adjacent battery cell 100b among the plurality of battery cells 100A, and a protection circuit module 23 having one end connected to the connection tab 22. The protection circuit module 23 may include a battery management system (BMS). The connection tab 22 may include a body portion in contact with the terminal parts 14 and 15 between the adjacent battery cells 100a and 100b and an extension portion extending from the body portion and connected to the protection circuit module 23. The connection tab 22 may be, for example, a bus bar.

Each battery cell 100A may include a battery case, an electrode assembly received (or accommodated) in the battery case, and an electrolyte. The electrode assembly and the electrolyte react electrochemically to store and release (e.g., generate) energy. The terminal parts 14 and 15 electrically connected to the connection tab 22 and a vent 17 as a discharge passage for gas generated inside the battery case may be provided on one side of (e.g., an upper side of) the battery cell 100A. The terminal parts 14 and 15 of the battery cell 100A may be a positive electrode terminal 14 and a negative electrode terminal 15 having different polarities from each other, and the terminal parts 14 and 15 of the adjacent battery cells 100a and 100b may be electrically connected to each other in series or parallel by the connection tab 22, to be described in more detail below. Although a serial connection has been described as an example, the connection structure is not limited thereto, and various connection structures may be employed as desired or necessary. The number and arrangement of battery cells is not limited to the structure shown in FIG. 10 and may be changed as desired or necessary.

The plurality of battery cells 100A may be arranged in (e.g., may be stacked in) one direction so that the wide surfaces of the battery cells 100a and 100b face each other, and the plurality of battery cells 100A may be fixed by the housings 26-1, 26-2, 26-3, and 26-4. The housings 26-1, 26-2, 26-3, and 26-4 may include a pair of end plates 26-1 and 26-2 facing the wide surfaces of the battery cell 100A and a side plate 26-3 and a bottom plate 26-4 connecting the pair of end plates 26-1 and 26-2 to each other. The side plate 26-3 may support side surfaces of the battery cells 100A, and the bottom plate 26-4 may support bottom surfaces of the battery cells 100A. The pair of end plates 26-1 and 26-2, the side plate 26-3 and the bottom plate 26-4 may be connected by bolts 26-5 and/or any other suitable fastening members and methods known to those of ordinary skill in the art.

The protection circuit module 23 may have electronic components and protection circuits mounted thereon and may be electrically connected to connection tabs 22. The protection circuit module 23 includes a first protection circuit module 23a and a second protection circuit module 23b extending along the direction in which the plurality of battery cells 100A are arranged in different locations. The first protection circuit module 23a and the second protection circuit module 23b may be spaced from each other at a suitable interval (e.g., a predetermined interval) and arranged parallel to each other to be electrically connected to adjacent connection tabs 22, respectively. For example, the first protection circuit module 23a extends on one side of the upper portion of the plurality of battery cells 100A along the direction in which the plurality of battery cells 100A are arranged, and the second protection circuit module 23b extends at the other side of the upper portion of the plurality of battery cells 100A along the direction in which the plurality of battery cells 100A are arranged. The second protection circuit module 23b may be spaced from the first protection circuit module 23a at a suitable interval (e.g., a predetermined interval) with the vents 17 interposed therebetween but may be disposed parallel to the first protection circuit module 23a. As such, the two protection circuit modules are spaced from each other side-by-side along the direction in which the plurality of battery cells 100A are arranged, thereby reducing or minimizing the area of the printed circuit board (PCB) constituting the protection circuit module. By separately configuring the protection circuit module into two protection circuit modules, unnecessary PCB area can be reduced or minimized. The first protection circuit module 23a and the second protection circuit module 23b may be connected to each other by a conductive connection member 25-1. One side of the conductive connection member 25-1 is connected to the first protection circuit module 23a, and the other side thereof is connected to the second protection circuit module 23b so that the two protection circuit modules 23a and 23b can be electrically connected with each other.

The connection may be performed by any one of soldering, resistance welding, laser welding, projection welding and/or any other suitable connection methods known to those of ordinary skill in the art.

The connection member 25-1 may be, for example, an electric wire. The connection member 25-1 may include a material having elasticity or flexibility. Via the connecting member 25-1, it may be possible to check and manage whether the voltage, temperature, and/or current of the plurality of battery cells 100A are normal. For example, the information received by the first protection circuit module from connection tabs adjacent to the first protection circuit module, such as voltage, current, and/or temperature, and the information received by the second protection circuit module from connection tabs adjacent to the second protection circuit module, such as voltage, current, and/or temperature, may be integrated and managed by the protection circuit module through the connection member 25-1.

When the battery cell 100A swells, shocks may be absorbed by the elasticity or flexibility of the connection member 25-1, thereby preventing the first and second protection circuit modules 23a and 23b from being damaged.

The geometry and structure of the connection member 25-1 is not limited to the shape and structure shown in FIG. 10.

Because the protection circuit module 23 is provided as the first and second protection circuit modules 23a and 23b, the area of the PCB constituting the protection circuit module can be reduced or minimized, and the space inside the battery module can be secured, which improves work efficiency by facilitating a fastening work for connecting the connection tab 22 and the protection circuit module 23 and repair work if (or when) an abnormality is detected in the battery module.

Although the secondary battery 100A may be implemented as a single cell, it may also be employed to manufacture a battery pack comprising a plurality of cells, or to manufacture a larger battery pack by increasing the size of the battery cell.

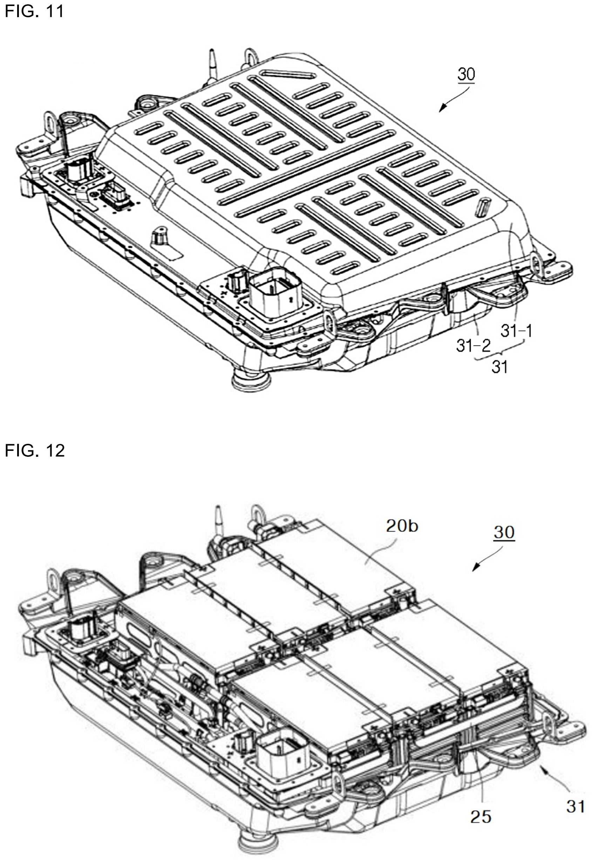

FIGS. 11 and 12 illustrate perspective views of a battery pack 30. The battery pack 30 may include a plurality of battery modules 20b and a housing 31 for accommodating the plurality of battery modules 20b. For example, the housing 31 may include first and second housings 31-1 and 31-2 coupled in opposite directions with respect to the plurality of battery modules 20b. The plurality of battery modules 20b may be electrically connected to each other by using a bus bar 25, and the plurality of battery modules 20b may be electrically connected to each other in a series/parallel or series-parallel mixed method, thereby obtaining desired (e.g., required) electrical output.

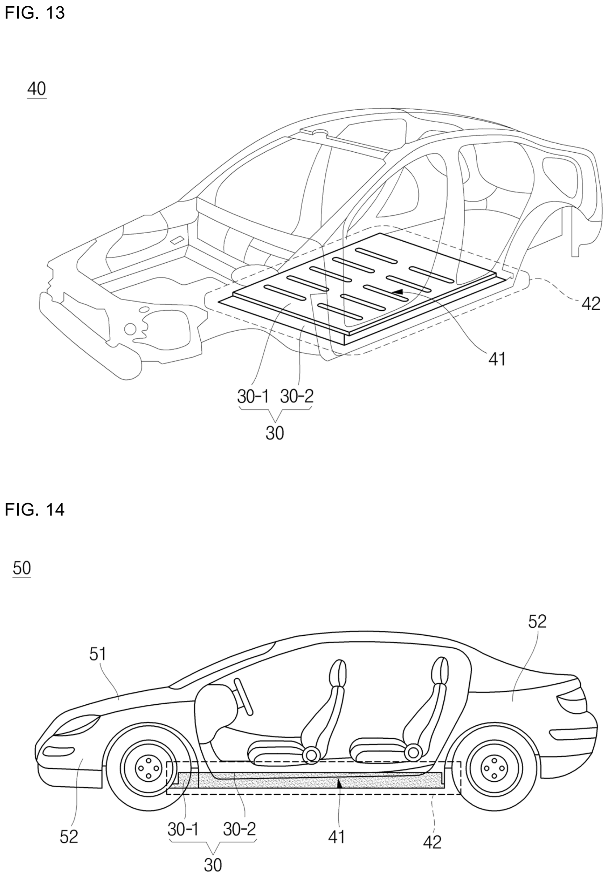

FIGS. 13 and 14 illustrate perspective and side views of a vehicle body 40 and vehicle components. In FIG. 13, a battery pack 30 may include a battery pack cover 30-1, which is a part of a vehicle underbody 41, and a pack frame 30-2 located under the vehicle underbody 41. In some embodiments, the battery pack cover 30-1 may correspond to the first housing 31-1, and the pack frame 30-2 may correspond to the second housing 31-2. The pack frame 30-2 and the battery pack cover 30-1 may be integrated to a vehicle floor 42. The vehicle underbody 41 separates the inside and outside of a vehicle, and the pack frame 30-2 may be located outside the vehicle.

Referring to FIG. 14, a vehicle 50 may be formed by combining additional parts, such as a hood 51 in front of the vehicle and fenders 52 respectively located in the front and rear of the vehicle to a vehicle body 40. The vehicle 50 may include the battery pack 30 that include the battery pack cover 30-1 and the pack frame 30-2, and the battery pack 30 may be coupled to the vehicle body 40.

As is apparent from embodiments of the present disclosure, it is possible to provide a method of manufacturing an electrode assembly for secondary batteries capable of simultaneously improving process speed and accuracy by adopting sub-unit stacking and batch notching in a stacking process, minimizing material waste, and flexibly responding to various assembly structures, and an electrode assembly manufactured using the same.

Although the present disclosure has been described above with respect to embodiments thereof, the present disclosure is not limited thereto. Various modifications and variations can be made thereto by those skilled in the art within the spirit of the present disclosure.

## Claims

1. A method of manufacturing an electrode assembly (110) for secondary batteries, the method comprising:
preparing a current collection set (110S) including a first electrode plate (111), a second electrode plate (112), a first separator (1131) interposed between the first and second electrode plates (111, 112), and a second separator (1132) provided on a surface of the first electrode plate (111) or the second electrode plate (112);
cutting the current collection set (110S) into a plurality of segments each having a predetermined pattern; and
stacking the plurality of segments,
wherein the first electrode plate (111) comprises a first electrode active material layer (111b) and a first electrode uncoated portion (111a), the first electrode active material layer (111b) comprising a first electrode active material and covering at least one surface of a first electrode current collector, the first electrode uncoated portion (111a) not being coated with the first electrode active material,
wherein the second electrode plate (112) comprises a second electrode active material layer (112b) and a second electrode uncoated portion (112a), the second electrode active material layer (112b) comprising a second electrode active material and covering at least one surface of a second electrode current collector, the second electrode uncoated portion (112a) not being coated with the second electrode active material,
wherein the first electrode uncoated portion (111a) and the second electrode uncoated portion (112a) do not overlap each other.

2. The method as claimed in claim 1, wherein in the cutting, the first electrode active material layer (111b), the first electrode uncoated portion (111a), the second electrode active material layer (112b), and the second electrode uncoated portion (112a) are simultaneously cut,
particularly wherein the first electrode uncoated portion (111a) extends in a longitudinal direction and located on one side of a lateral direction, and wherein the second electrode uncoated portion (112a) extends in the longitudinal direction and located on the other side of the lateral direction.

3. The method as claimed in claim 2, wherein the first electrode uncoated portion (111a) is exposed to the one side and the second electrode uncoated portion (112a) is exposed to the other side.

4. The method as claimed in any of claims 1-3, wherein the predetermined pattern comprises a main region corresponding to the first electrode active material layer (111b) and a protruding region protruding from the main region to each of the one side and the other side.

5. The method as claimed in claim 2, wherein the current collection set (110S) includes individual segments sequentially arranged in the longitudinal direction, particularly wherein each individual segment comprises a main region corresponding to the first electrode active material layer and a protruding region protruding from the main region to each of the one side and the other side.

6. The method as claimed in any of the preceding claims, wherein the cutting is performed using a die frame or a laser,
particularly wherein an area of the first electrode active material layer (111b) is less than an area of the second electrode active material layer (112b), particularly wherein an area of the separators (1131, 1132) is greater than an area of each of the first electrode active material layer (111b) and the second electrode active material layer (112b),
particularly wherein in the preparing, at least a part of the current collection set (110S) is fixed using a fixing member, and wherein in the stacking, the fixing member is removed.

7. The method as claimed in claim 2, wherein the first electrode plate (111) has a plurality of the first electrode uncoated portion (111a) extending from the one side spaced at regular intervals, and wherein in the cutting, at least a part of each of the plurality of the first electrode uncoated portion (111a) extend in the lateral direction.

8. The method as claimed in claim 2, wherein the first electrode uncoated portion (111a) extends in the longitudinal direction from a center relative to the lateral direction, and the second electrode plate (112) comprises a first column electrode plate (2121) having the second electrode uncoated portion (2121a) extending in the longitudinal direction and being located on the one side and a second column electrode plate (2122) having the second electrode uncoated portion (2122a) extending in the longitudinal direction and being located on the other side,
particularly wherein the second electrode uncoated portion (112a) is exposed to each of the one side and the other side and the first electrode uncoated portion (111a) is exposed along a center line of the current collection set (110S),
particularly wherein the predetermined pattern comprises a main region corresponding to the first electrode active material layer (111b) and a protruding region protruding from the main region in a direction toward each of the second electrode uncoated portion (2122a) of the first column electrode plate (2121) and the first electrode uncoated portion (2121a).

9. The method as claimed in claim 8, wherein the predetermined pattern comprises a main region corresponding to the first electrode active material layer (111b) and a protruding region protruding from the main region in a direction toward each of the second electrode uncoated portion (2122a) of the second column electrode plate (2122) and the first electrode uncoated portion (2121a).

10. The method as claimed in claim 8, wherein the predetermined pattern includes individual segments sequentially arranged in the lateral direction with respect to the first electrode uncoated portion (2121a), each individual segment comprising a main region corresponding to the first electrode active material layer (111b)and a protruding region protruding from the main region to each of the one side and the other side of the second direction.

11. The method as claimed in claim 10, wherein a plurality of the protruding region located at the first electrode uncoated portion (111a) engage with each other or one another.

12. The method as claimed in any of the preceding claims, further comprising stacking a plurality of current collection sets (110S),
wherein the step of cutting comprises cutting the stacked plurality of the current collection sets (110S) into a plurality of segment having the predetermined pattern.

13. The method as claimed in any of the preceding claims, wherein the second electrode plate (112), the first separator (113s), the first electrode plate (111), and the second separator (1132) are sequentially stacked in the current collection set (110S), or wherein the second separator (1132), the second electrode plate (112), the first separator (1131), and the first electrode plate (111) are sequentially stacked in the current collection set (110S).

14. An electrode assembly (110) for secondary batteries, the electrode assembly (110) comprising:
a plurality of first electrode plates (111) each having a first electrode uncoated portion (111a), a part of the first electrode uncoated portion (111a) being notched, the first electrode uncoated portion (111a) extending and protruding to one side of a lateral direction;
a plurality of second electrode plates (112) each having a second electrode uncoated portion (112a), a part of the second electrode uncoated portion (112a) being notched, the second electrode uncoated portion (112a) extending and protruding to the other side of the lateral direction; and
a plurality of separators (113) each being interposed between one of the plurality of first electrode plates (111) and one the plurality of second electrode plates (112).

15. The electrode assembly as claimed in claim 14, wherein corners of both sides of each of the first electrode uncoated portion (111a) and the second electrode uncoated portion (112a) are notched, or wherein each of the first electrode uncoated portion (111a) and the second electrode uncoated portion (112a) protrude outwardly asymmetrically.
